# EUROPÄISCHE PATENTSCHRIFT

(11) **EP 3 791 711 B1**
(45) Veröffentlichungstag und Bekanntmachung des Hinweises auf die Patenterteilung: **02.03.2022**
(21) Anmeldenummer: 19197217.3
(22) Anmeldetag: 13.09.2019
(51) Int. Cl.: A01G 9/12, A01G 17/14

(54) **SPALIERPFAHL**
TRELLIS STAKE
BROCHE POUR ESPALIER

(43) Veröffentlichungstag der Anmeldung: 17.03.2021
(73) Patentinhaber: voestalpine Krems GmbH, 3500 Krems (AT)
(72) Erfinder: Mayer, Florian, 3506 Brunnkirchen (AT); Weitz, Franz, 3500 Krems -Stein (AT); Humpert, Axel, 56841 Traben-Trarbach (DE); Wallisch, Christoph, 3812 Groß-Siegharts (AT)
(74) Vertreter: HGF

(56) Entgegenhaltungen:
- EP-A1- 1 153 541
- EP-A1- 1 629 709
- EP-A1- 3 195 722
- EP-A2- 1 232 684
- DE-C- 18 735
- DE-U1- 29 902 428
- FR-A- 1 338 991

## Beschreibung

Die Erfindung betrifft eine Vorrichtung für den Wein- oder Obstbau mit integriertem Einschlagbereich, sowie ein Verfahren zur Herstellung dieser.

Spalierpfähle welche aus metallischen Spaltbändern rollgeformt sind und als Rankhilfe für Obst- und Weinkulturen, aber auch als Zaunstützen dienen sind allgemein bekannt.

Bereits die DE1212768 beschreibt einen Spalierpfahl in Form eines offenen U-förmigen Blechprofils, gefertigt aus einem Blechband mittels Formwalzmaschine und konvexen auskragenden Haken, welche aus den freien Flanschen gestanzt und ausgebogen werden. Für die Montage im Freigelände wird weiter eine L-förmige Montageplatte gezeigt, welche in den Boden getrieben wird, um den Spalierpfahl sicher zu fixieren. Dabei ist ein vergleichsweise hoher Aufwand erforderlich, da für jeden Spalierpfahl, eine Montageplatten eingeschlagen werden muss.

Aus der HR20100171A2 ist auch ein Spalierpfahl bekannt, welcher als U-förmiges Profil ausgeführt ist und an den Flanschen und der Basisfläche eine wellenförmige Profilierung aufweist und teilausgestanzte Haken für die Aufnahme von Rankdrähten zeigt. Diese Art der Profilierung ist jedoch auch bereits aus dem Geschmacksmuster AT31257 bekannt. Bei beiden Spalierpfählen ergibt sich neben dem Problem der offenen Schnittkante bei den Haken für die Drahtaufnahme auch die Schwierigkeit, dass bei der Montage im festen Erdreich hohe Einschlagkräfte benötigt werden, um den Pfahl für ausreichende Stabilität tief genug in den Boden zu treiben. Besonders die Ecken der freien Flanschteile werden hierbei sehr leicht umgebogen und erhöhen den Widerstand bei der Montage.

Die US7905053B2 zeigt eine Lösung zur Erleichterung der Montage, bei der ein mechanisch vergleichsweise instabiler Spalierpfahl aus Polymer mit einem separaten spitz zulaufenden Einschlagdorn mit kreuzförmig angeordneten Finnen kombiniert ist, um sowohl die Montage zu erleichtern, als auch ein Weggleiten im Erdreich nach einer Seite zu verhindern. Nachteilig bei dieser Ausführungsform erweist sich jedoch der hohe Aufwand mehrerer einzelner Teile in der Produktion, welche auch noch in einem zweiten Schritt zu einem Spalierpfahl zusammengefügt werden müssen.

Aus der EP 1 232 684 A2 ist ein Pfahl aus einem profilgewalzten Metallblech mit einem im Wesentlichen U-förmigen Querschnitt bekannt. Dieser Spalierpfahl besitzt eine sich in Längsrichtung sich erstreckende Basisfläche mit einem Wellenprofil sowie hiervon seitlich abgehenden Flanschen wobei in den Flanschen Längsrippen mit einem U-förmigen Querschneitt ausgebildet sind, in welche nach außen offene Aufnahmetaschen für Spanndrähte ausgebildet sind.

Aus der EP 1 629 709 A1 ist ein Pfahl aus profiliertem Metallblech für den Wein- oder Obstbau bekannt der einen im Wesentlichen U-förmigen Querschnitt mit einem U-Rücken und zwei U-Schenkeln und Mitteln zur Aufnahme von Drähten bekannt.

Aus der DE 18 735 C ist ein angespitzter Rebstockpfahl aus Walzeisen mit unterschiedlichen Querschnitten bekannt.

Aus der FR 1.338.991 sind Kunststoffpfähle für den Pflanzenbau bekannt, welche ebenfalls unterschiedliche Querschnitte und eine bodenseitige Spitze aufweisen.

Aus der EP 3 195 722 A1 ist ein Pfahl für den Wein- oder Obstbau bekannt, der im wesentlichen einen U- bzw. C-förmigen Querschnitt besitzt, wobei im Bereich des Überganges der Basisfläche zu den Seitenflächen Aufnahmen für Drähte freigeschnitten sind.

Die Erfindung hat sich daher die Aufgabe gestellt, eine Vorrichtung eingangs geschilderter Art zur besonders einfachen Montage herzustellen und ein Verfahren in welchem die Herstellung besonders materialsparend und effizient kontinuierlich erfolgen kann.

Die Erfindung löst die gestellte Aufgabe durch eine Vorrichtung in Form eines Spalierpfahls gemäß Anspruch 1 und ein Verfahren zur Herstellung erfindungsgemäßer Vorrichtungen gemäß Anspruch 8.

Die erfindungsgemäße Vorrichtung ist eine Vorrichtung für den Wein- oder Obstbau in Form eines Spalierpfahls (1) mit:
- einer sich in Längsrichtung des Spalierpfahls erstreckenden Basisfläche (20) mit profilierten Wellen (21),
- freien Flanschen (8a, 8b), und
- aus den Flanschen (8a, 8b) konvex ausgeformten Verstärkungssicken (5) mit Aufnahmen (2) für Spanndrähte (3),
   **wobei**
   im Bereich des Spalierpfahles (1), welcher in das Erdreich eingeschlagen wird,
- eine an der Basisfläche (20) verlaufende Treibkante (10) vorgesehen ist, und
- eine in einer Draufsicht auf den Spalierpfahl in Blickrichtung entlang der Längsachse des Spalierpfahls (1) und der Basisfläche (20) sich rechtwinkelig zu der Treibkante (10) anschließende Schneidkante (11) an den Flanschen (8a, 8b) vorgesehen ist, wobei die Schneidkante (11) in einem spitzen Winkel zur Basisfläche (20) angeordnet ist.

Sind bei einem Spalierpfahl (1) sowohl eine Treibkante (10) an der Basisfläche (20), als auch eine wie vorstehend definiert verlaufende Schneidkante (11) an den freien Flanschen (8a, 8b) vorhanden, kann dadurch der Widerstand, welcher beim Einschlagen in festes Erdreich auftritt, wesentlich reduziert werden. Die erfindungsgemäße Vorrichtung kann daher besonders einfach und ohne Montagehilfen vergleichsweise tief und mit wenig Kraftaufwand in den Boden getrieben werden.

Vorzugsweise besteht der Spalierpfahl (1) aus einem rollgeformten Profil, wodurch eine besonders wirtschaftliche Produktion erreicht werden kann. Noch wesentlich können die Korrosionseigenschaften verbessert werden, wenn schmelztauchbeschichtetes Spaltband verwendet wird.

Wird der Spalierpfahl in jenem Bereich, welcher sich nach der Montage im Erdreich befindet, mit einer in Schichtdicke verstärkten Korrosionsschutzschicht ausgestattet, kann dadurch die Standzeit wesentlich verlängert werden. Besonders wenn diese Korrosionsschutzschicht aus einer Legierung aus Zn und/oder Magnesium besteht, welche den Schutz auch bei widrigen Umgebungsbedingungen wesentlich verbessern kann.

Wird die Treibkante (10) des Spalierpfahls (1) einer Härtebehandlung unterzogen, so können die Montageeigenschaften weiter verbessert werden. Wobei die Härtebehandlung sowohl in Form mechanischer Behandlung, als auch thermischer Behandlung durchgeführt werden kann.

Weisen die freien Flansche (8a, 8b) einen Endbereich (12) auf, welcher eine nach innen gerundete Geometrie aufweist, kann damit eine zusätzliche mechanische Verstärkung des Spalierpfahls erreicht werden. Dadurch kann bei der Montage ein Umknicken der frei stehenden Ecken an der Front der Flansche (8a, 8b) des Spalierpfahls vermieden werden, wodurch die aufzuwendenden Kräfte beim Einschlagen weiter reduziert sein können.

Wird die Aufnahme (2) in konkaver Form in die Verstärkungssicken (5) von außen eingeprägt, kann dadurch eine Verletzung der Korrosionsschutzschicht vermieden werden, wodurch eine Verlängerung der Standzeit des Spalierpfahls (1) ermöglicht werden kann. Wird die Aufnahme (2) rechtwinkelig zur Achse des Profils geprägt, können die mechanischen Abnutzungen, welche bei Bewegung des Spanndrahtes (3) auftreten, weitgehend verhindert werden, womit sich die Standzeit weiter verlängern kann.

Wird die Treibkante (10) des Spalierpfahls (1) über jenes Wellental (13), welches den Übergang von der Basisfläche (20) zu den freien Flanschen (8a, 8b) bildet, weitergeführt und geht sie erst dort in die Schneidkante (11) über, kann damit eine wesentliche mechanische Verstärkung erreicht werden, da die Neigung zur Aufrollung dieses Übergangs, als auch der Treibkante (10) selbst, reduziert wird.

Das erfindungsgemäße Verfahren ist ein Verfahren zur Herstellung von erfindungsgemäßen Spalierpfählen (1) aus einem Spaltband (60), aufweisend eine Abfolge von Stanz- und Rollprofilierungsschritten, bei dem
- die Schneidkante (11) durch Ausstanzen mit einem Stanzmesser (50a, 50b)aus dem Spaltband (60) hergestellt wird,
   wobei das Stanzmesser (50a, 50b) mit einer Spitze (51) beabstandet von einer Kantlinie (14) in das Spaltbandmaterial eindringt, entlang der in einer sich anschließenden Rollprofilierung ein Wellental (13) ausgebildet wird.

Erfolgt die Herstellung des Profils für den Spalierpfahl (1) in der erfindungsgemäßen Art, kann damit die erforderliche Geometrie kontinuierlich und besonders zeitsparend erzeugt werden.

Erfolgt die Entnahme des nicht benötigten Materials mit den Stanzmessern (50a, 50b) bereits am flachen Spaltband (60), kann dadurch eine Verformung der Treibkante (10) und der Schneidkante (11) beim abschließenden Ablängen verhindert werden, darüber hinaus kann sich dadurch eine besonders abfallarme Produktion des Spalierpfahls (1) ergeben.

Werden die Spalierpfähle (1) nach dem Rollprofilieren vereinzelt, kann dadurch eine besonders zeiteffiziente und kontinuierliche Produktion erreicht werden.

Wird bei der Vereinzelung der Spalierpfähle (1) Material verwendet, welches sich durch mechanische Behandlung verfestigen lässt, kann durch eine abscherende Trennung, besonders an der Treibkante (10) eine wesentliche Verbesserung der Montageeigenschaften des Spalierpfahls (1) ermöglicht werden.

In einem weiteren erfindungsgemäßen Verfahren wird lediglich die Treibkante (10) nach dem Vereinzeln einer Erwärmung bis zur Austenitisierung unterzogen und anschließend abgeschreckt, dadurch kann eine Härtung der Treibkante (10) und eine Erhöhung der Standfestigkeit und Verbesserung der Montageeigenschaften erreicht werden, wobei die Materialstärke des Spalierpfahls (1) reduziert werden kann. Die Erwärmung kann insbesondere induktiv erfolgen, da die Kanten besonders rasch die erforderliche Temperatur aufweisen, ohne dass der restliche Spalierpfahl (1) eine wesentliche Erwärmung erfährt.

In den Figuren ist der Erfindungsgegenstand anhand eines Ausführungsbeispiels näher dargestellt. Es zeigen
- Fig. 1: Riss in Längsachse einer erfindungsgemäßen Profilgeometrie des Spalierpfahls, bzw. eine Draufsicht auf einen erfindungsgemäßen Spalierpfahl in Blickrichtung entlang der Längsachse,
- Fig. 2: eine Draufsicht auf die offene, der Basisfläche gegenüberliegende, Seite einer erfindungsgemäßen Geometrie
- Fig. 3: eine Seitenansicht des Spalierpfahls
- Fig. 4: eine isometrische Ansicht einer erfindungsgemäßen Profilgeometrie mit Details zu den Treib- und Schneidkanten.
- Fig. 5: Ansicht des Spaltbandes während der Materialentnahme bei der Stanzung der Schneidkanten

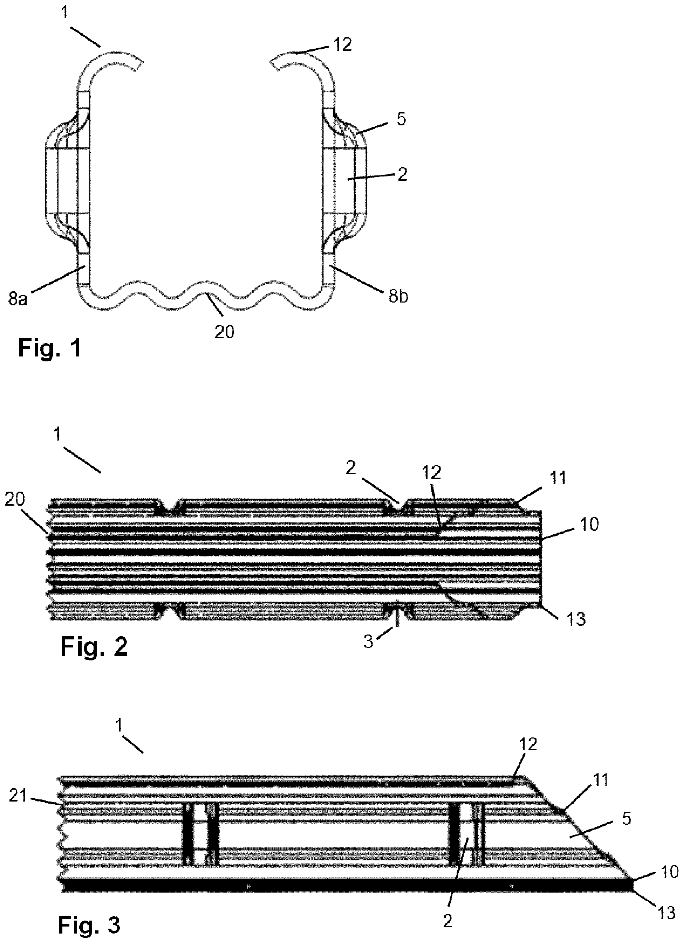

Die nach Fig. 1 beispielsweise dargestellte Profilgeometrie des Spalierpfahl (1) umfasst eine Basisfläche (20) mit wellenförmiger Profilierung, freie Flansche (8a, 8b) Verstärkungssicken (5) an den Flanschen (8a, 8b) und nach innen gebogene Endbereiche (12).

Fig. 2 zeigt Aufnahmen (2) für andeutungsweise dargestellten Spanndraht (3), die Treibkante (19), den Übergang mit dem Wellental (13), und den Endbereich (12) der freien Flansche (8a, 8b).

In Fig. 3 ist die Ausrichtung der Aufnahme (2) zu erkennen, die wellenförmige Profilierung (21), und die Verstärkungssicke (5) an den freien Flanschen (8), sowie das Wellental (13) im Übergangsbereich zwischen der Treibkante (10) und der Schneidkante (11) und den Endbereich (12), dessen Kante innerhalb der Umhüllenden der Profilgeometrie zu liegen kommt.

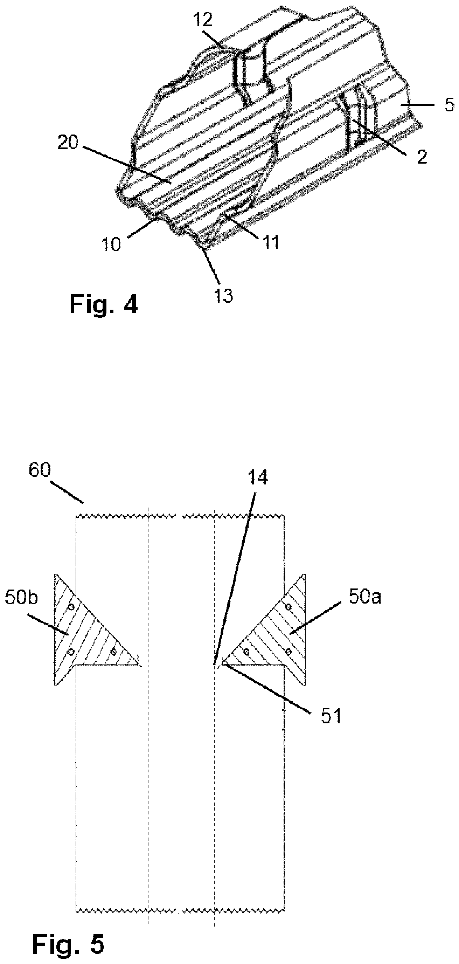

Fig. 4 zeigt die Profilgeometrie des Spalierpfahls (1) in isometrischer Ansicht, wobei insbesondere die Details des Übergangsbereichs zwischen Treibkante (10) und Schneidkante (11) mit dem Wellental (13) sichtbar sind.

Besonders der nach dem Wellental (13) gleichbleibende Verlauf, welcher erst mit Abstand in die Schneidkante (11) abknickt und so eine C-förmige Linie bildet.

Fig. 5 zeigt jenen Ausschnitt des Verfahrens, bei dem am flachen Spaltband (60) mit den Stanzmessern (50a, 50b) jener Bereich entnommen wird, an dem sich die Schneidkante (11) befindet. Insbesondere der Abstand zwischen der Spitze (51) und der Kantlinie (14), welcher am freien Flansch (8a, 8b) später gemeinsam mit der Treibkante (10) im Wesentlichen eine C-Form ausbildet.

## Patentansprüche

1. Vorrichtung für den Wein- oder Obstbau in Form eines Spalierpfahls (1) mit:
- einer sich in Längsrichtung des Spalierpfahls erstreckenden Basisfläche (20) mit profilierten Wellen (21),
- freien Flanschen (8a, 8b), und
- aus den Flanschen (8a, 8b) konvex ausgeformten Verstärkungssicken (5) mit Aufnahmen (2) für Spanndrähte (3),
**dadurch gekennzeichnet, dass**
im Bereich des Spalierpfahles (1), welcher in das Erdreich eingeschlagen wird,
- eine an der Basisfläche (20) verlaufende Treibkante (10) vorgesehen ist, und
- eine in einer Draufsicht auf den Spalierpfahl in Blickrichtung entlang der Längsachse des Spalierpfahls (1) und der Basisfläche (20) sich rechtwinkelig zu der Treibkante (10) anschließende Schneidkante (11) an den Flanschen (8a, 8b) vorgesehen ist,
wobei die Schneidkante (11) in einem spitzen Winkel zur Basisfläche (20) angeordnet ist.

2. Vorrichtung nach Anspruch 1, **dadurch gekennzeichnet, dass** der Spalierpfahl (1) aus metallischem Spaltband rollgeformt ist, insbesondere aus schmelztauchbeschichtetem Spaltband.

3. Vorrichtung nach Anspruch 1, **dadurch gekennzeichnet, dass** der Spalierpfahl (1) im Bereich, der sich nach einer Montage im Erdreich befindet, eine verstärkte Korrosionsschutzschicht aufweist, insbesondere eine Korrosionsschutzschicht die aus einer Legierung besteht, welche Zink und/oder Magnesium beinhaltet.

4. Vorrichtung nach Anspruch 1, **dadurch gekennzeichnet, dass** die Treibkante (10) gehärtet ist.

5. Vorrichtung nach Anspruch 1, **dadurch gekennzeichnet, dass** die freien Flansche (8a, 8b) einen nach innen weisenden, gerundeten Endbereich (12) aufweist.

6. Vorrichtung nach Anspruch 1, **dadurch gekennzeichnet, dass** die Aufnahme (2) in rund-konkaver Form von außen in die Verstärkungssicken (5) eingeprägt ist, insbesondere rechtwinkelig zur Längsachse der Vorrichtung (1).

7. Vorrichtung nach Anspruch 1, **dadurch gekennzeichnet, dass** die Treibkante (10) C-förmig mit dem Wellental (13) der wellenförmigen Profilierung (20) auf die Flansche (8a, 8b) weitergeführt ist und erst dort in die Schneidkante (11) übergeht.

8. Verfahren zur Herstellung von Spalierpfählen (1) nach einem oder mehreren der vorstehenden Ansprüche aus einem Spaltband (60), aufweisend eine Abfolge von Stanz- und Rollprofilierungsschritten, bei dem
- die Schneidkante (11) durch Ausstanzen mit einem Stanzmesser (50a, 50b)aus dem Spaltband (60) hergestellt wird,
wobei das Stanzmesser (50a, 50b) mit einer Spitze (51) beabstandet von einer Kantlinie (14) in das Spaltbandmaterial eindringt, entlang der in einer sich anschließenden Rollprofilierung ein Wellental (13) ausgebildet wird.

9. Verfahren nach Anspruch 8, **dadurch gekennzeichnet, dass** die Entnahme des Materials mit Stanzmesser (50a, 50b) kontinuierlich am flachen Spaltband (6) erfolgt.

10. Verfahren nach Anspruch 8, **dadurch gekennzeichnet, dass** nach der Rollprofilierung eine Vereinzelung der Spalierpfähle (1) erfolgt.

11. Verfahren nach Ansprüche 10, **dadurch gekennzeichnet, dass** bei der Vereinzelung der Spalierpfähle (1) eine Kaltverfestigung erfolgt.

12. Verfahren nach Anspruch 8, **dadurch gekennzeichnet, dass** die Treibkante (10) einer Wärmebehandlung unterzogen wird, insbesondere unter nachfolgender rascher Abkühlung.

## Claims

1. Device for viticulture or fruit growing in the form of a trellis post (1) with:
- a base surface (20) extending in the longitudinal direction of the trellis post with profiled corrugations (21),
- open flanges (8a, 8b), and
- reinforcing beads (5) rising in a convex manner from the flanges (8a, 8b) with supports (2) for tension wires (3),
**characterised in that**
in the area of the trellis post (1), which is hammered into the ground,
- a driving edge (10) is provided along the base surface (20), and
- a cutting edge (11) is provided, arranged in an overhead view over the trellis post in a line of sight along the longitudinal axis of the trellis post (1) and the base surface (20) making a right angle to the driving edge (10) on the flanges (8a, 8b),
wherein the cutting edge (11) is arranged at an acute angle to the base surface (20).

2. Device according to claim 1, **characterised in that** the trellis post (1) is roll-formed from split metallic strip, in particular from split, hot dip-coated strip.

3. Device according to claim 1, **characterised in that** the trellis post (1) has a reinforced corrosion protective coating in the area which will be in the ground after installation, in particular a corrosion protective coating consisting of an alloy containing zinc and/or magnesium.

4. Device according to claim 1, **characterised in that** the driving edge (10) is hardened.

5. Device according to claim 1, **characterised in that** the open flange (8a, 8b) has an inwardly pointing, rounded end area (12).

6. Device according to claim 1, **characterised in that** the receptacle (2) is embossed in a round-concave shape from the exterior into the reinforcing beads (5), in particular at right angles to the longitudinal axis of the device (1).

7. Device according to claim 1, **characterised in that** the driving edge (10) in the shape of a letter C merges with the wave trough (13) of the wave-shaped profiling (20) on to the flange (8a, 8b) and, only there, merges into the cutting edge (11).

8. Method for the manufacture of trellis posts (1) according to one or more of the earlier claims from a split strip (60), having a series of stamping and roll-forming steps, in which
- the cutting edge (11) is produced by stamping out with a stamping knife (50a, 50b) from the split strip (60),
wherein the stamping knife (50a, 50b) penetrates the split strip material with a point (51) spaced away from a bending line (14), along which a wave trough (13) is formed in subsequent roll profiling.

9. Method according to claim 8, **characterised in that** the removal of material with a stamping knife (50a, 50b) takes place continuously on the flat split strip (6).

10. Method according to claim 8, **characterised in that** the trellis posts (1) are separated after roll profiling.

11. Method according to claim 10, **characterised in that** strain hardening takes place as the trellis posts (1) are being separated.

12. Method according to claim 8, **characterised in that** the driving edge (10) undergoes heat treatment, particularly when cooled quickly afterwards.

## Revendications

1. Dispositif de culture vigneronne ou d'arboriculture sous forme d'une broche pour espalier (1) avec :
- une surface de base (20) s'étendant en direction longitudinale de la broche pour espalier avec des ondulations profilées (21),
- des brides libres (8a, 8b) et
- des moulures de renforcement (5) convexes dans les brides (8a, 8b) avec logements (2) pour fils de tension (3),
**caractérisé en ce que**
dans la zone de la broche pour espalier (1) plantée dans le sol,
- une arête de poussée (10) s'étendant sur la surface de base (20) est prévue et
- une arête de coupe (11) s'étendant en vue de dessus sur la broche pour espalier dans la direction de vue perpendiculairement à l'arête de poussée (10) le long de l'axe longitudinal de la broche pour espalier (1) et de la surface de base (20) est prévue sur les brides (8a, 8b),
l'arête de coupe (11) étant disposée sous un angle aigu par rapport à la surface de base (20).

2. Dispositif selon la revendication 1, **caractérisé en ce que** la broche pour espalier (1) est formée par roulage à partir de feuillard métallique, en particulier à partir de feuillard revêtu par immersion.

3. Dispositif selon la revendication 1, **caractérisé en ce que** la broche pour espalier (1) présente, dans la zone se trouvant dans le sol après le montage, une couche épaisse de protection anti-corrosion, en particulier une couche de protection anti-corrosion en alliage contenant du zinc et/ou du magnésium.

4. Dispositif selon la revendication 1, **caractérisé en ce que** l'arête de poussée (10) est durcie.

5. Dispositif selon la revendication 1, **caractérisé en ce que** les brides libres (8a, 8b) présentent une zone terminale (12) arrondie tournée vers l'intérieur.

6. Dispositif selon la revendication 1, **caractérisé en ce que** le logement (2) de forme concave ronde est introduit de l'extérieur dans les moulures de renforcement (5), en particulier perpendiculairement à l'axe longitudinal du dispositif (1).

7. Dispositif selon la revendication 1, **caractérisé en ce que** l'arête de poussée (10) continue en forme de C avec la dépression (13) du profilage ondulé (20) sur les brides (8a, 8b) et ne se transforme en l'arête de coupe (11) qu'à cet endroit.

8. Procédé de fabrication de broches pour espalier (1) selon l'une ou plusieurs revendications précédentes à partir d'un feuillard (60), présentant une séquence d'étapes d'emboutissage et de profilage par rouleaux, lors duquel
- l'arête de coupe (11) est fabriquée à partir du feuillard (60) par l'estampage au moyen d'une lame de découpage (50a, 50b),
la lame de découpage (50a, 50b) pénétrant avec une pointe (51) dans le matériau de feuillard à partir d'une ligne d'arête (14), le long de laquelle une dépression (13) est formée dans un profilage par rouleaux consécutif.

9. Procédé selon la revendication 8, **caractérisé en ce que** le matériau est prélevé en continu sur le feuillard plat (6) à l'aide de la lame de découpage (50a, 50b).

10. Procédé selon la revendication 8, **caractérisé en ce que** les broches pour espalier (1) individuelles sont séparées après le profilage par rouleaux.

11. Procédé selon la revendication 10, **caractérisé en ce qu'**un écrouissage a lieu après la séparation des broches pour espalier (1) individuelles.

12. Procédé selon la revendication 8, **caractérisé en ce que** l'arête de poussée (10) est soumise à un traitement thermique, en particulier avec un refroidissement prompt consécutif.
